# EUROPEAN PATENT APPLICATION

(11) **EP 1 401 226 A1**
(43) Date of publication of application: **24.03.2004**
(21) Application number: 02256525.3
(22) Date of filing: 20.09.2002
(51) Int. Cl.: H04Q 7/34

(54) **A method, and apparatus, for addressing a message to mobile user terminals**

(71) Applicant: LUCENT TECHNOLOGIES INC., Murray Hill, New Jersey 07974-0636 (US)
(72) Inventor: Cao, Qiang, Swindon, Wiltshire SN2 3XL (GB); Young, Gordon Peter, Bracknell, Berkshire RG42 1YL (GB)
(74) Representative: Sarup, David Alexander

(57) **Abstract**

A method is provided of addressing a message to a subset of the mobile user terminals in radio connection with a radio network controller of a telecommunications network comprising including in the message a first digital identifier and a second digital identifier. The first digital identifier identifies the radio network controller in connection with the mobile terminals of the subset, the first digital identifier being known to the mobile user terminals. The second digital identifier being selected bits of identities of the mobile user terminals in the subset, each mobile user terminal knowing its respective identity. All of the identities of the mobile user terminals in the subset having the same said selected bits in common.

## Description

### Technical Field

The present invention relates to a method of addressing a message to a subset of the mobile user terminals in radio connection with a radio network controller. The present invention also relates to a telecommunications network comprising addressing means operative to address a message to a subset of the mobile user terminals in radio connection with a radio network controller.

### Background of the Invention

A Radio Network Controller (RNC) maintains a list of temporary identities for mobile user terminals (User Equipments,UEs) connected to the Universal Mobile Telecommunications System (UMTS) terrestrial radio access network (UTRAN) In this connected radio state the mobile user terminals (UEs) normally identify messages intended for them by this temporary identity assigned by and stored in the RNC. The temporary identity assigned to a mobile user terminal (UE) by the radio network controller (RNC) is called a U-RNTI, and consists of the SRNC identity (12 bits) and the S-RNTI (20 bits). The S-RNTI is unique to the mobile user terminal (UE) whereas all mobile user terminals (UEs) connected to the same serving radio network controller (SRNC) have the same SRNC identity. If the radio network controller (RNC) or part of the radio network controller (RNC) is needed to be reset these temporary identities are lost, but the mobile user terminals (UEs) remain in a connected radio state.

The known solution to this is to release the mobile user terminals (UEs) from the radio network controller (RNC) by paging the mobile user terminals (UEs) collectively, and instructing them to release their radio connections. The use of the paging procedure is the normal mechanism for reaching mobile user terminals (UEs) with or without radio connections. The serving radio network controller does this paging for mobile user terminals with radio connections by the use of the U-RNTI value with the bit values of the S-RNTI masked out (leaving only the SRNC identity bits for comparison), in order that all mobile user terminals (UEs) can be commonly addressed by a single message. The SRNC identifier field remains stored in the network and used in the radio-connection release paging message.
All mobile user terminals (UEs) that are able to match the same part of their stored U-RNTI value to this unmasked received part of the U-RNTI value, then accept the message as intended for them and so follow the release procedure contained in the remainder of the received message.

### Summary of the Invention

The known solution mentioned above allows one release message to be sent per paging message, causing the release of all mobile user terminals (UEs) with the common group identity of being connected to that radio network controller (RNC). However, this approach presents a problem, when there are multiple mobile user terminal (UE) groups (say there are total N mobile user terminal (UE) groups) connected to the radio network controller (RNC), and only M (M<N) of the mobile user terminal (UE) groups need to release radio connection as the result of the radio network controller (RNC) reset.

Accordingly the present invention provides a method of addressing a message to a subset of the mobile user terminals in radio connection with a radio network controller of a telecommunications network comprising including in the message a first digital identifier and a second digital identifier,
the first digital identifier identifying the radio network controller in connection with the mobile terminals of the subset, the first digital identifier being known to the mobile user terminals, and
the second digital identifier being selected bits of identities of the mobile user terminals in the subset, each mobile user terminal knowing its respective identity,
all of the identities of the mobile user terminals in the subset having the same said selected bits in common.

The present invention in its preferred embodiments advantageously makes it possible to identify multiple individual groups of mobile user terminals (UEs) by suitable assignment of S-RNTI mobile user terminal identifiers, and subsequently release a selected group using one paging message. This is particularly advantageous if only part of the radio network controller (RNC) is reset not requiring all mobile user terminals (UEs) to be released.

Preferably the number of selected bits in the second identifier is adjusted dependent on which subset of the mobile user terminals is selected.

Preferably the first identifier is the SRNC identity field and the second identifier is the bits of a respective subscriber- radio network temporary identity (S-RNTI) that are common to the subset of mobile user terminals.

Preferably the message includes an indication of where said selected bits are in the identities of the mobile user terminals.

Preferably the selected bits are the most significant bits of the identities of the mobile user terminals in the subset.

The present invention also provides a method of sending a radio connection release message to a selected subset of the mobile user terminals in radio connection via a radio network with a radio network controller in consequence of the radio network controller being at least partially reset, comprising the method of addressing the message recited above.

The present invention also provides a telecommunications network comprising addressing means operative to address a message to a subset of the mobile user terminals in radio connection with a radio network controller of the telecommunications network by including in the message a first digital identifier and a second digital identifier,
the first digital identifier identifying the radio network controller in connection with the mobile terminals of the subset, the first digital identifier being known to the mobile user terminals, and
the second digital identifier being selected bits of identities of the mobile user terminals in the subset, each mobile user terminal knowing its respective identity,
all of the identities of the mobile user terminals in the subset having the same said selected bits in common,
the mobile user terminals in the subset receiving the message and as the first and second identifiers match corresponding information known by those mobile user terminals, those mobile terminals act in response to the message.

Preferably the network comprises selection means operative to adjust the number of selected bits in the second identifier dependent on which subset of the mobile user terminals is selected.

Preferably the first identifier is the SRNC identity field and the second identifier is the bits of a respective subscriber- radio network temporary identity (S-RNTI) that are common to the subset of mobile user terminals.

Preferably in use the message includes an indication of where said selected bits are in the identities of the mobile user terminals.

Preferably the selected bits are the most significant bits of the identities of the mobile user terminals in the subset.

Preferably the network is operative to send a radio connection release message to a selected subset of the mobile user terminals in radio connection via a radio network with a radio network controller in consequence of the radio network controller being at least partially reset.

### Brief Description of the Drawings

A preferred embodiment of the present invention will now be described by way of example and with reference to the drawings, in which:
Figure 1 is a diagram illustrating a UMTS telecommunications network and some mobile user terminals,
Figure 2 is a diagram illustrating a temporary identifier of a mobile user terminal, and
Figure 3 is a diagram illustrating a temporary identifier of a mobile user terminal with its S-RNTI field masked (prior art),
Figure 4 is a diagram illustrating a first preferred temporary identifier of a mobile user terminal masked.
Figure 5 is a diagram illustrating a further preferred temporary identifier of a mobile user terminal masked.

### Detailed Description

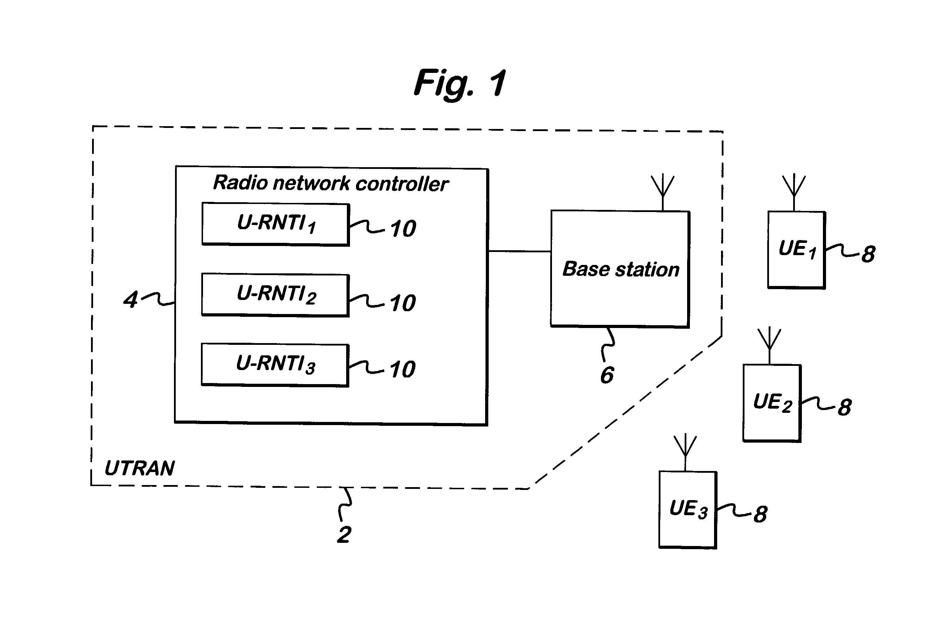

As shown in Figure 1, a preferred UMTS terrestrial radio access network UTRAN 2 consists of a Radio Network Controller (RNC) 4 which controls the operation of several base stations 6 (one of which is shown in Figure 1 for simplicity). At any time, in operation, a base station 6 communicates with each of a number of a mobile user terminals 8 (user equipment UE)

The Radio Network Controller 4 maintains a list of temporary identities 10 for the mobile user terminals (UEs) 8 connected to the UMTS UTRAN 2. In this connected radio state the mobile user terminals (UEs) 8 each normally identify messages intended for itself by this temporary identity 10 sent in the message and stored and assigned in the radio network controller (RNC). If the radio network controller (RNC) 4 or part of the radio network controller (RNC) 4 is needed to be reset these temporary identities 10 are lost, but the mobile user terminals (UEs) 8 remain in a connected radio state (i.e. in radio resource control (RRC) connection).

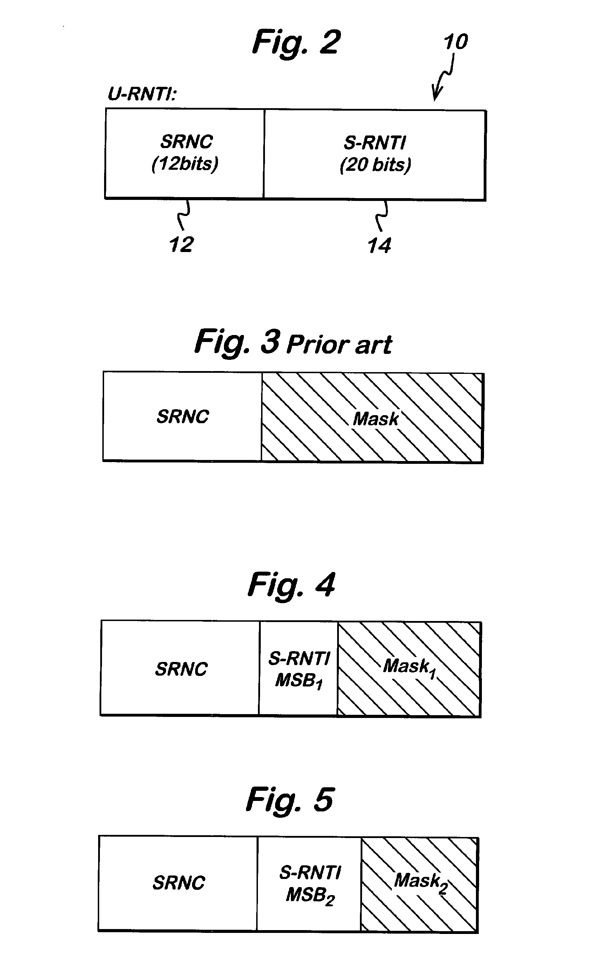

The temporary identity 10 assigned to a mobile user terminal (UE) 8 by the radio network controller (RNC) 4 is called a user-radio network temporary identity (U-RNTI), and, as shown in Figure 2 consists of a serving radio network controller (SRNC) identity field (12 bits) 12 and a serving-radio network temporary identity (S-RNTI) identity field (20 bits) 14. The S-RNTI is unique to the particular mobile user terminal (UE) 8 whereas all mobile user terminals (UEs) 8 connected to the same serving radio network controller (RNC) 4 have the same SRNC identity field.

It was realised that by using the more significant bits (MSB) of the S-RNTI field 14 to provide common numbering for grouped mobile user terminals (UEs) 8, (and so the less significant bit values to provide the unique identity of the mobile user terminals (UEs) 8), by applying a mask on the complete U-RNTI bit string, the less significant bits of any received S-RNTI could be masked out (i.e. ignored during comparison with the stored value of U-RNTI in the respective mobile user terminal. This would leave, not only the SRNC identity, but also the more significant bits of the S-RNTI identifying specific groups of mobile user terminals (UEs) controlled by the serving radio network controller.

The bits of the U-RNTI that are masked are indicated in the message by identifying the individual bit positions in the U-RNTI bit string to be masked. The mobile user terminal receiving the U-RNTI field along with any masked bit indication, makes a comparison of this received U-RNTI using the associated mask with its stored U-RNTI to determine whether the message is intended for itself. In performing the comparison only values which are not masked are compared between the two U-RNTI bit strings, and the bit positions indicated as masked values of the U-RNTI are ignored from the comparison.

An example of such a masked U-RNTI identifier is shown in Figure 3. The SRNC and selected most significant bits of the S-RNTI, denoted S-RNTI MSB in Figure 4, are revealed, allowing a selected group of mobile user terminals (UEs) to be identified in the radio-connection-release paging message.

Even though lost from the radio network controller (RNC) 4, the SRNC identifier field together with the most significant bits of the S-RNTI field of U-RNTI identifiers remain stored elsewhere in the network, for example in an operations and maintenance centre (OMC) (not shown) connected to the radio network controller 4.These are used to identify the selected group of mobile user terminals (UEs) in the radio-connection release paging message. Any values, e.g.all zeros, are sent as the less significant bits of the S-RNTI field together with an indication that these bits are "masked" and so should be ignored in the comparison.

The unnecessary release of mobile user terminals (UEs) for whom temporary identities still exist within a partially reset radio network controller (RNC) is thus avoided.

As shown in Figure 5 in comparison with Figure 4, the mask applied to the SRNC identifier and most significant bits of the S-RNTI field (stored in the operations and maintenance centre (OMC, not shown)) can be of variable size such that variation of the masked U-RNTI length (I,.e the number of S-RNTI most significant bits considered) enables particular groups of mobile user terminals (UEs) to be selectably identified (with varying degrees of granularity as to the numbers of mobile user terminals (UEs)), and so instructed to release their radio connections by a single paging message. Thus only the mobile user terminals (UEs) 8 that are required to be released are actually released following the partial reset of the radio network controller (RNC)4.

This use of a variable mask enables precise identification of the affected mobile user terminal (UE) group to be made in the single paging message for radio connection release. Inclusion of any of multiple different groups of mobile user terminal (UE) identities within the paging message is possible. By partially masking the U-RNTI to reveal common bit values identifying several different groups using the same more significant S-RNTI bits (which can be considered as a single larger selected group), the reset radio network controller (RNC) releases only those mobile user terminals (UEs) affected by the reset (i.e. those whose temporary identity was lost as the result of the reset) by sending a single paging message.

To summarise, the mobile user terminals (UEs) are assigned temporary identifiers such that they form distinctive groups of mobile user terminals (UEs) within the total number of mobile user terminals (UEs) supported by that radio network controller (RNC). After an radio network controller (RNC) reset, the temporary identifiers previously stored within the radio network controller (RNC), and used to address the connected mobile user terminals (UEs) are lost. It is then beneficial to inform the mobile user terminals (UEs) to release their radio connections in such a manner that a specific group of mobile user terminals (UEs) can be released without also releasing other connected mobile user terminals (UEs) under control of that radio network controller (RNC). This ensures that in the case of partial reset of the radio network controller (RNC) only the required mobile user terminals (UEs) needing to be released could be informed to do so, rather than all mobile user terminals (UEs).

## Claims

1. A method of addressing a message to a subset of the mobile user terminals in radio connection with a radio network controller of a telecommunications network comprising including in the message a first digital identifier and a second digital identifier,
the first digital identifier identifying the radio network controller in connection with the mobile terminals of the subset, the first digital identifier being known to the mobile user terminals, and
the second digital identifier being selected bits of identities of the mobile user terminals in the subset, each mobile user terminal knowing its respective identity,
all of the identities of the mobile user terminals in the subset having the same said selected bits in common.

2. A method of addressing a message according to claim 1, in which the number of selected bits in the second identifier is adjusted dependent on which subset of the mobile user terminals is selected.

3. A method according to any preceding claim, in which the first identifier is the SRNC identity field and the second identifier is the bits of a respective subscriber- radio network temporary identity (S-RNTI) that are common to the subset of mobile user terminals.

4. A method according to any preceding claim in which the message includes an indication of where said selected bits are in the identities of the mobile user terminals.

5. A method according to any preceding claim, in which the selected bits are the most significant bits of the identities of the mobile user terminals in the subset.

6. A method of sending a radio connection release message to a selected subset of the mobile user terminals in radio connection via a radio network with a radio network controller in consequence of the radio network controller being at least partially reset, comprising the method of addressing the message according to any preceding claim.

7. A telecommunications network comprising addressing means operative to address a message to a subset of the mobile user terminals in radio connection with a radio network controller of the telecommunications network by including in the message a first digital identifier and a second digital identifier,
the first digital identifier identifying the radio network controller in connection with the mobile terminals of the subset, the first digital identifier being known to the mobile user terminals, and
the second digital identifier being selected bits of identities of the mobile user terminals in the subset, each mobile user terminal knowing its respective identity,
all of the identities of the mobile user terminals in the subset having the same said selected bits in common,
the mobile user terminals in the subset receiving, the message and as the first and second identifiers match corresponding information known by those mobile user terminals, those mobile terminals act in response to the message.

8. A telecommunications network according to claim 7, comprising selection means operative to adjust the number of selected bits in the second identifier dependent on which subset of the mobile user terminals is selected.

9. A network according claim 7 or claim 8, in which the first identifier is the SRNC identity field and the second identifier is the bits of a respective subscriber-radio network temporary identity (S-RNTI) that are common to the subset of mobile user terminals.

10. A network according to any of claims 7 to 9, in which, in use the message includes an indication of where said selected bits are in the identities of the mobile user terminals.
